# EUROPÄISCHE PATENTSCHRIFT

(11) **EP 1 246 412 B1**
(45) Veröffentlichungstag und Bekanntmachung des Hinweises auf die Patenterteilung: **06.09.2006**
(21) Anmeldenummer: 02003708.1
(22) Anmeldetag: 19.02.2002
(51) Int. Cl.: H04L 12/56

(54) **Netzwerk mit einer Anpassung der Rahmenstruktur von Sub-Netzwerken**
Network with adaptation of the frame structure of subnetworks
Réseau avec adaptation de la structure de trame des sous-réseaux

(30) Priorität: 19.02.2001 DE 10107991
(43) Veröffentlichungstag der Anmeldung: 02.10.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Habetha, Jörg, Philips Corp. Int. Prop. GmbH, 52066 Aachen (DE)
(74) Vertreter: Volmer, Georg

(56) Entgegenhaltungen:
- EP-A- 1 037 432
- EP-A- 1 047 213
- WO-A-99/59298
- DE-A- 10 053 854
- US-A- 4 791 629
- "BLUETOOTH SPECIFICATION VERSION 1.0 B, CORE" BLUETOOTH SPECIFICATION VERSION, XX, XX, Bd. 1, 1. Dezember 1999 (1999-12-01), Seiten 95-126, XP002174708
- YUJIN LIM ET AL: "Performance Evaluation of the Bluetooth-based Public Internet Access Point" IEEE, THE 15TH INTERNATIONAL CONFERENCE ON INFORMATION NETWORKING (ICOIN'01), 31. Januar 2001 (2001-01-31) - 2. Februar 2001 (2001-02-02), Seiten 643-648, XP010534331 Beppu City, Oita, Japan
- JIANG Z, LEUNG V, WONG V: "Reducing Collisions between Bluetooth Piconets by Orthogonal Hop Set Partitioning" UNIVERSITY OF BRITISH COLUMBIA, [Online] 13. Juni 2003 (2003-06-13), XP002261508 Canada Gefunden im Internet: <URL:http://www.ece.ubc.ca/~vleung/confere nce_papers/rawcon2003.pdfhttp://www.ece.ub c.ca/~vleung/conference_papers/rawcon2003. pdf> [gefunden am 2003-11-13]

## Beschreibung

Die Erfindung bezieht sich auf ein Verfahren und ein Netzwerk mit mehreren Sub-Netzwerken, die jeweils über Brücken-Terminals verbindbar sind und die jeweils einen Controller zur Steuerung eines Sub-Netzwerkes enthalten. Solche Netzwerke sind selbstorganisierend und können beispielsweise aus mehreren Sub-Netzwerken bestehen. Sie werden auch als Adhoc-Netzwerke bezeichnet.

Aus dem Dokument "J. Habetha, A.Hettich, J. Peetz, Y. Du: Central Controller Handover Procedure for ETSI-BRAN HIPERLAN/2 Ad Hoc Networks and Clustering with Quality of Service Gurantees, 1<st> IEEE Annual Workshop on Mobile Ad Hoc Networking & Computing, Aug. 11, 2000" ist ein Adhoc-Netzwerk mit mehreren Terminals bekannt. Wenigstens ein Terminal ist als Controller zur Steuerung des Adhoc-Netzwerkes vorgesehen. Unter bestimmten Bedingungen kann es erforderlich sein, dass ein anderes Terminal Controller wird. Falls ein solches Netzwerk eine bestimmte Grösse erreicht, ist die Einteilung in Sub-Netzwerke erforderlich. Zur Kommunikation mit den Sub-Netzwerken dienen als Brücken-Terminals ausgestaltete Terminals. Diese Brücken-Terminals sind abwechselnd mit den Sub-Netzwerken synchronisiert. Durch unterschiedliche MAC-Rahmenstrukturen der verbundenen Netzwerke entstehen Wartezeiten bis ein Brücken-Terminal mit dem neu synchronisierten Netzwerk Daten austauschen kann.

Die WO 99/59298 beschreibt ein Verfahren und eine Vorrichtung zur Synchronisation in einem Kommunikationsnetzwerk. Es wird beschrieben, verschiedene Bitströme, die in Rahmen organisiert sind, aufeinander zu synchronisieren. Jeder Rahmen enthält ein Synchronisationssignal. Dieses Synchronisationssignal wird zur Synchronisation detektiert und einem im Netzwerk befindlichen Slave mitgeteilt, so dass dieser Slave den von ihm ausgehenden Bitstrom auf den Bitstrom des Masters synchronisieren kann. Dazu werden in den einzelnen Rahmen Zeitschlitze eingefügt oder die Rahmen verkürzt.

Der Erfindung liegt die Aufgabe zugrunde, ein Netzwerk zu schaffen, welches die Wartezeiten nach einer Umschaltung eines Brücken-Terminals von einem zum anderen Sub-Netzwerk vermindert.

Die Aufgabe wird durch die Merkmale der unabhängigen Ansprüche gelöst.

Erfindungsgemäß wird die Rahmenstruktur wenigstens eines Sub-Netzwerkes zu wenigstens einer Rahmenstruktur eines anderen Sub-Netzwerks verschoben, wodurch eine Minimierung oder ggf. auch eine Eliminierung der Wartezeit erreicht wird. Die Verschiebung darf nur bis zu einer vorgegebenen Rahmendifferenz der Rahmenstrukturen der verbundenen Sub-Netzwerke durchgeführt werden. Es bleibt im Idealfall nur eine Rahmendifferenz zwischen den Rahmenstrukturen der verbundenen Sub-Netzwerke bestehen, die notwendig ist, weil jedes Brücken-Terminal eine Umschaltzeit zur Synchronisation mit einem Sub-Netzwerk benötigt.

Es gibt verschiedene Varianten, die Verschiebung zu realisieren. Diese Varianten sind in den Ansprüchen 5 und 6 beschrieben. Ein Controller eines Sub-Netzwerks verständigt sich mit einem anderen Controller eines anderen Sub-Netzwerks über die Art der Verschiebung. Diese Entscheidung kann auch ein Brücken-Terminal durchführen.

Die Erfindung bezieht sich auch auf einen Controller eines Sub-Netzwerks, das über Brücken-Terminals mit anderen Sub-Netzwerken eines Netzwerks verbindbar ist

Ausführungsbeispiele der Erfindung werden nachstehend anhand der Figuren näher erläutert. Es zeigen:
- Fig. 1: ein Adhoc-Netzwerk mit drei Sub-Netzwerken, die jeweils zur Funkübertragung vorgesehene Terminals enthalten,
- Fig. 2: ein Terminal des lokalen Netzwerks nach Fig. 1,
- Fig. 3: eine Funkvorrichtung des Terminals nach Fig. 2,
- Fig. 4: eine Ausführung eines zur Verbindung von zwei Sub-Netzwerken vorgesehenen Brücken-Terminals,
- Fig. 5: MAC-Rahmen von zwei Sub-Netzwerken und die MAC-Rahmenstruktur eines Brückenterminals,
- Fig. 6: den Aufbau eines MAC-Rahmens und
- Fig. 7 bis 10: verschiedene Rahmenstrukturen von zwei Sub-Netzwerken.

Das im folgenden dargestellte Ausführungsbeispiel bezieht sich auf Adhoc-Netzwerke, die im Gegensatz zu traditionellen Netzwerken selbstorganisierend sind. Jedes Terminal in einem solchen Adhoc-Netzwerk kann einen Zugang zu einem Fest-Netzwerk ermöglichen und ist sofort einsetzbar. Ein Adhoc-Netzwerk ist dadurch gekennzeichnet, dass die Struktur und die Anzahl von Teilnehmern innerhalb vorgegebener Grenzwerte nicht festgelegt ist. Beispielsweise kann eine Kommunikationsvorrichtung eines Teilnehmers aus dem Netzwerk genommen oder eingebunden werden. Im Gegensatz zu traditionellen Mobilfunknetzen ist ein Adhoc-Netzwerk nicht auf eine fest installierte Infrastruktur angewiesen.

Die Größe der Fläche des Adhoc-Netzwerks ist in der Regel sehr viel größer als der Übertragungsbereich von einem Terminal. Eine Kommunikation zwischen zwei Terminals kann daher die Einschaltung weiterer Terminals erforderlich machen, damit diese Nachrichten oder Daten zwischen den beiden kommunizierenden Terminals übertragen können. Solche Adhoc-Netzwerke, bei denen eine Weiterleitung von Nachrichten und Daten über ein Terminal notwendig ist, werden als Multihop-Adhoc-Netzwerke bezeichnet. Eine mögliche Organisation eines Adhoc-Netzwerkes besteht darin, regelmäßig Sub-Netzwerke oder Cluster zu bilden. Ein Sub-Netzwerk des Adhoc-Netzwerks kann beispielsweise durch über Funkstrecken verbundene Terminals von um einen Tisch sitzenden Teilnehmern gebildet werden. Solche Terminals können z.B. Kommunikationsvorrichtungen zum drahtlosen Austausch von Dokumenten, Bildern usw. sein.

Es lassen sich zwei Typen von Adhoc-Netzwerken angeben. Das sind dezentralisierte und zentralisierte Adhoc-Netzwerke. In einem dezentralisierten Adhoc-Netzwerk ist die Kommunikation zwischen den Terminals dezentralisiert, d.h. jedes Terminal kann mit jedem anderen Terminal unter der Voraussetzung direkt kommunizieren, dass die Terminals jeweils in dem Übertragungsbereich des anderen Terminals liegen. Der Vorteil eines dezentralisierten Adhoc-Netzwerks ist dessen Einfachheit und Robustheit gegen Fehler. Bei einem zentralisierten Adhoc-Netzwerk werden bestimmte Funktionen, wie z.B. die Funktion des Mehrfachzugriffs eines Terminals zum Funkübertragungsmedium (Medium Access Control = MAC) von einem bestimmten Terminal pro Sub-Netzwerk gesteuert. Dieses Terminal wird als zentrales Terminal oder zentraler Controller (Central Controller = CC) bezeichnet. Diese Funktionen müssen nicht immer von demselben Terminal ausgeführt werden, sondern können von einem als zentraler Controller arbeitenden Terminal zu einem anderen dann als zentraler Controller agierenden Terminal übergeben werden. Der Vorteil eines zentralen Adhoc-Netzwerks ist, dass in diesem auf einfache Art eine Vereinbarung über die Dienstgüte (Quality of Service = QoS) möglich ist. Ein Beispiel für ein zentralisiertes Adhoc-Netzwerk ist ein Netzwerk, welches nach der HIPERLAN/2 Home Environment Extension (HEE) organisiert ist (vgl. J. Habetha, A.Hettich, J. Peetz, Y. Du, "Central Controller Handover Procedure for ETSI-BRAN HIPERLAN/2 Ad Hoc Networks and Clustering with Quality of Service Gurantees", 1" IEEE Annual Workshop on Mobile Ad Hoc Networking & Computing, , Aug. 11, 2000).

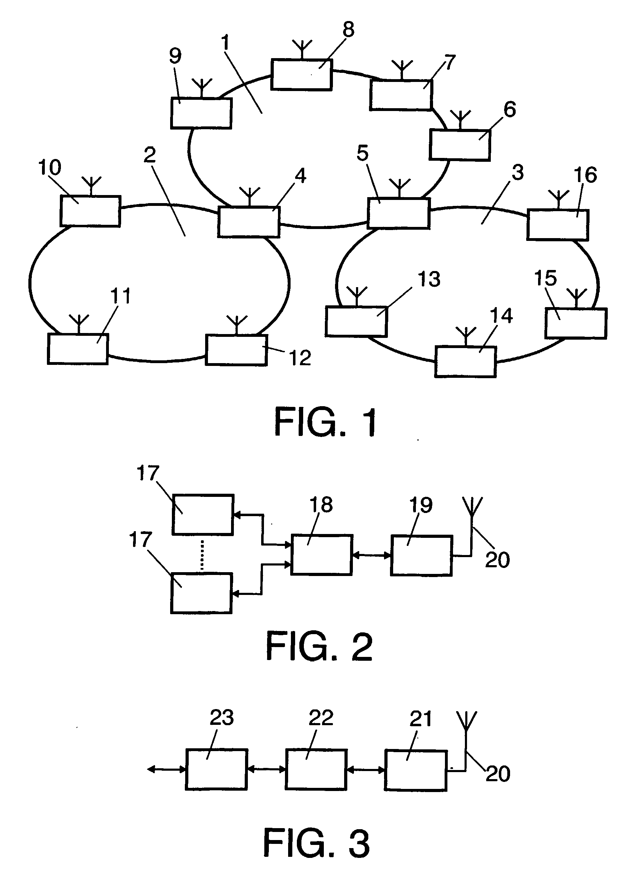

In Fig. 1 ist ein Ausführungsbeispiel eines Adhoc-Netzwerks mit drei Sub-Netzwerken 1 bis 3 dargestellt, die jeweils mehrere Terminals 4 bis 16 enthalten. Bestandteil des Sub-Netzwerks 1 sind die Terminals 4 bis 9, des Sub-Netzwerks 2 die Terminals 4 und 10 bis 12 und des Sub-Netzwerks 3 die Terminals 5 und 13 bis 16. In einem Sub-Netzwerk tauschen die jeweils zu einem Sub-Netzwerk gehörenden Terminals Daten über Funkstrecken aus. Die in Fig. 1 eingezeichneten Ellipsen geben den Funkbereich eines Sub-Netzwerks (1 bis 3) an, in dem zwischen den zu dem Sub-Netzwerk gehörenden Terminals eine weitgehend problemlose Funkübertragung möglich ist.

Die Terminals 4 und 5 werden Brücken-Terminals genannt, weil diese einen Datenaustausch zwischen zwei Sub-Netzwerken 1 und 2 bzw. 1 und 3 ermöglichen. Das Brücken-Terminal 4 ist für den Datenverkehr zwischen den Sub-Netzwerken 1 und 2 und das Brücken-Terminal 5 für den Datenverkehr zwischen den Sub-Netzwerken 1 und 3 zuständig.

Ein Terminal 4 bis 16 des lokalen Netzwerks nach Fig. 1 kann eine mobile oder feste Kommunikationsvorrichtung sein und enthält beispielsweise mindestens eine Station 17, eine Verbindungskontrollvorrichtung 18 und eine Funkvorrichtung 19 mit Antenne 20, wie dies Fig. 2 zeigt. Eine Station 17 kann beispielsweise ein tragbarer Computer, Fernsprecher usw. sein.

Eine Funkvorrichtung 19 der Terminals 6 bis 16 enthält, wie Fig. 3 zeigt, außer der Antenne 20 eine Hochfrequenzschaltung 21, ein Modem 22 und eine Protokollvorrichtung 23. Die Protokollvorrichtung 23 bildet aus dem von der Verbindungskontrollvorrichtung 18 empfangenen Datenstrom Paketeinheiten. Eine Paketeinheit enthält Teile des Datenstroms und zusätzliche von der Protokollvorrichtung 23 gebildete Steuerinformationen. Die Protokollvorrichtung verwendet Protokolle für die LLC-Schicht (LLC = Logical Link Control) und die MAC-Schicht (MAC = Medium Access Control). Die MAC-Schicht steuert den Mehrfachzugriff eines Terminals zum Funkübertragungsmedium und die LLC-Schicht führt eine Fluss- und Fehlerkontrolle durch.

Wie oben erwähnt, ist in einem Sub-Netzwerk 1 bis 3 eines zentralisierten Adhoc-Netzwerks ein bestimmtes Terminal zuständig für die Kontroll- und Managementfunktionen und wird als zentraler Controller bezeichnet. Der Controller arbeitet außerdem als normales Terminal im zugehörigen Sub-Netzwerk. Der Controller ist z.B. für die Registrierung von Terminals, die den Betrieb im Sub-Netzwerk aufnehmen, für den Verbindungsaufbau zwischen wenigstens zwei Terminals im Funkübertragungsmedium, für die Resourcenverwaltung und für die Zugriffssteuerung im Funkübertragungsmedium zuständig. So erhält beispielsweise ein Terminal eines Sub-Netzwerks nach der Registrierung und nach der Anmeldung eines Übertragungswunsches vom Controller Übertragungskapazität für Daten (Paketeinheiten) zugewiesen.

In dem Adhoc-Netzwerk können die Daten zwischen den Terminals nach einem TDMA-, FDMA- oder CDMA-Verfahren (TDMA = Time Division Multiplex Access, FDMA = Frequency Division Multiplex Access, CDMA = Code Division Multiplex Access) ausgetauscht werden. Die Verfahren können auch kombiniert werden. Jedem Sub-Netzwerk 1 bis 3 des lokalen Netzwerks sind eine Anzahl von bestimmten Kanälen zugeordnet, die als Kanalbündel bezeichnet werden. Ein Kanal ist durch einen Frequenzbereich, einen Zeitbereich und z.B. beim CDMA-Verfahren durch einen Spreizungscode bestimmt. Beispielsweise kann jedem Sub-Netzwerk 1 bis 3 zum Datenaustausch ein bestimmter, jeweils unterschiedlicher Frequenzbereich mit einer Trägerfrequenz fᵢ zur Verfügung stehen. In einem solchen Frequenzbereich können beispielsweise Daten mittels des TDMA-Verfahrens übertragen werden. Dabei kann dem Sub-Netzwerk 1 die Trägerfrequenz f₁, dem Sub-Netzwerk 2 die Trägerfrequenz f₂ und dem Sub-Netzwerk 3 die Trägerfrequenz f₃ zugewiesen werden. Das Brücken-Terminal 4 arbeitet einerseits, um mit den anderen Terminals des Sub-Netzwerks 1 einen Datenaustausch durchführen zu können, mit der Trägerfrequenz f₁ und andererseits, um mit den anderen Terminals des Sub-Netzwerks 2 einen Datenaustausch durchführen zu können, mit der Trägerfrequenz f₂. Das zweite im lokalen Netzwerk enthaltene Brücken-Terminal 5, welches Daten zwischen den Sub-Netzwerken 1 und 3 überträgt, arbeitet mit den Trägerfrequenzen f₁ und f₃.

Wie oben erwähnt, hat der zentrale Controller beispielsweise die Funktion der Zugriffssteuerung. Das bedeutet, dass der zentrale Controller für die Bildung von Rahmen der MAC-Schicht (MAC-Rahmen) verantwortlich ist. Hierbei wird das TDMA-Verfahren angewendet. Ein solcher MAC-Rahmen weist verschiedene Kanäle für Steuerinformationen und Nutzdaten auf.

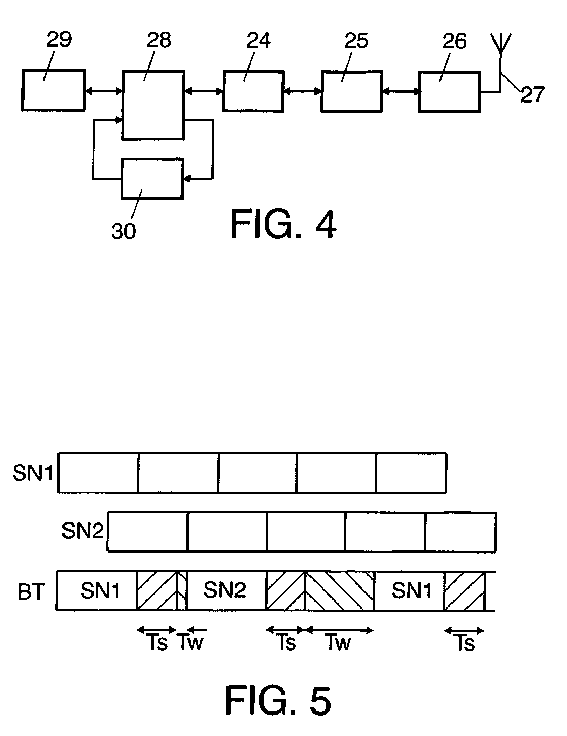

Ein Blockschaltbild eines Ausführungsbeispiels eines Brücken-Terminals ist in Fig. 4 dargestellt. Die Funkschaltvorrichtung dieses Brücken-Terminals enthält jeweils eine Protokollvorrichtung 24, ein Modem 25 und eine Hochfrequenzschaltung 26 mit Antenne 27. Mit der Protokollvorrichtung 24 ist eine Funkschaltvorrichtung 28 verbunden, die des weiteren an eine Verbindungskontrollvorrichtung 29 und einer Zwischenspeichervorrichtung 30 angeschlossen ist. Die Zwischenspeichervorrichtung 30 enthält in dieser Ausführungsform ein Speicherelement und dient zur Zwischenspeicherung von Daten und ist als FIFO-Baustein realisiert (First In First Out), d.h. die Daten werden in der Reihenfolge aus der Zwischenspeichervorrichtung 30 gelesen, in der sie eingeschrieben worden sind. Das in Fig. 4 dargestellte Terminal kann ebenfalls als normales Terminal arbeiten. An die Verbindungskontrollvorrichtung 29 angeschlossene Stationen, die nicht in Fig. 4 eingezeichnet sind, liefern dann über die Verbindungskontrollvorrichtung 29 Daten zur Funkschaltvorrichtung 28.

Das Brücken-Terminal nach der Fig. 4 ist abwechselnd mit einem ersten und zweiten Sub-Netzwerk synchronisiert. Unter Synchronisation wird der gesamte Prozess der Einbindung eines Terminals im Sub-Netzwerks bis zum Austausch von Daten verstanden. Wenn das Brücken-Terminal mit dem ersten Sub-Netzwerk synchronisiert ist, kann es Daten mit allen Terminals und mit dem Controller dieses ersten Sub-Netzwerks austauschen. Werden von der Verbindungskontrollvorrichtung 29 Daten an die Funkschaltvorrichtung 28 geliefert, deren Bestimmungsort ein Terminal oder der Controller des ersten Sub-Netzwerks oder ein Terminal oder Controller eines anderen Sub-Netzwerks ist, die über das erste Sub-Netzwerk zu erreichen sind, leitet die Funkschaltvorrichtung diese Daten direkt an die Protokollvorrichtung 24 weiter. In der Protokollvorrichtung 24 werden die Daten solange zwischengespeichert, bis der vom Controller bestimmte Zeitabschnitt für die Übertragung erreicht ist. Wenn die von der Verbindungskontrollvorrichtung 29 ausgegebenen Daten zu einem Terminal oder dem Controller des zweiten Sub-Netzwerks oder zu einem anderen über das zweite Sub-Netzwerk zu erreichenden Sub-Netzwerk gesendet werden soll, muss die Funkübertragung bis zu dem Zeitabschnitt verzögert werden, in dem das Brücken-Terminal mit dem zweiten Sub-Netzwerk synchronisiert ist. Daher leitet die Funkschaltvorrichtung die Daten, deren Bestimmungsort im zweiten Sub-Netzwerk liegt oder deren Bestimmungsort über das zweite Sub-Netzwerk zu erreichen ist, zu der Zwischenspeichervorrichtung 30, welche die Daten solange zwischenspeichert, bis das Brücken-Terminal mit dem zweiten Sub-Netzwerk synchronisiert ist.

Wenn Daten von einem Terminal oder dem Controller des ersten Sub-Netzwerks vom Brücken-Terminal empfangen werden und deren Bestimmungsort ein Terminal oder der Controller des zweiten Sub-Netzwerks oder ein Terminal oder Controller eines anderen über das zweite Sub-Netzwerk zu erreichenden Sub-Netzwerks ist, werden diese Daten ebenfalls bis zur Synchronisation mit dem zweiten Sub-Netzwerk in der Zwischenspeichervorrichtung 30 abgelegt. Daten, deren Bestimmungsort eine Station des Brücken-Terminals ist, werden direkt über die Funkschaltvorrichtung 28 zur Verbindungskontrollvorrichtung 29 gegeben, die dann die empfangenen Daten zu der gewünschten Station leitet. Daten, deren Bestimmungsort weder eine Station des Brücken-Terminals noch ein Terminal oder Controller des zweiten Sub-Netzwerks ist, werden beispielsweise zu einem weiteren Brücken-Terminal gesendet.

Nach dem Synchronisationswechsel des Brücken-Terminals vom ersten zum zweiten Sub-Netzwerk werden die in der Zwischenspeichervorrichtung 30 befindlichen Daten in der Einschreibreihenfolge wieder aus der Zwischenspeichervorrichtung 30 gelesen. Anschließend können während der Dauer der Synchronisation des Brücken-Terminals mit dem zweiten Sub-Netzwerk alle Daten, deren Bestimmungsort ein Terminal oder der Controller des zweiten Sub-Netzwerks oder ein anderes über das zweite Sub-Netzwerk zu erreichende Sub-Netzwerk ist, sofort von der Funkschaltvorrichtung 28 zur Protokollvorrichtung 24 weitergegeben und nur die Daten, deren Bestimmungsort ein Terminal oder der Controller des ersten Sub-Netzwerks oder ein anderes über das erste Sub-Netzwerk zu erreichende Sub-Netzwerk ist, in der Zwischenspeichervorrichtung 30 gespeichert werden.

Die MAC-Rahmen von zwei Sub-Netzwerken SN1 und SN2 sind in der Regel nicht synchronisiert. Daher ist ein Brücken-Terminal BT mit einem Sub-Netzwerk SN1 oder SN2 nicht nur während einer Umschaltzeit Ts sondern auch während einer Wartezeit Tw nicht verbunden. Dies lässt sich aus Fig. 5 entnehmen, welche eine Folge von MAC-Rahmen der Sub-Netzwerke SN1 und SN2 und die MAC-Rahmenstruktur des Brücken-Terminals BT zeigt. Die Umschaltzeit Ts ist diejenige Zeit, die erforderlich ist, damit das Brücken-Terminal sich mit einem Sub-Netzwerk synchronisieren kann. Die Wartezeit Tw gibt die Zeit zwischen dem Ende der Synchronisation mit dem Sub-Netzwerk und dem Beginn eines neuen MAC-Rahmens dieses Sub-Netzwerks an.

Unter der Annahme, dass das Brücken-Terminal BT nur jeweils für die Dauer eines MAC-Rahmens mit einem Sub-Netzwerk SN1 oder SN2 verbunden ist, weist das Brücken-Terminal BT nur eine Kanalkapazität von 1/4 der verfügbaren Kanalkapazität eines Sub-Netzwerks auf. In dem anderen extremen Fall, dass das Brückenterminal BT für eine längere Zeit mit einem Sub-Netzwerk verbunden ist, beträgt die Kanalkapazität die Hälfte der verfügbaren Kanalkapazität eines Sub-Netzwerks.

Wie oben beschrieben, sind in der Regel die MAC-Rahmen der verschiedenen Sub-Netzwerke nicht miteinander synchronisiert. Daraus resultieren bei einem Verbindungsaufbau eines Brücken-Terminals zu einem Sub-Netzwerk Wartezeiten (vgl. Fig. 5: Tw), wodurch die Übertragung von Daten zwischen zwei Sub-Netzwerken sich verzögern.

Erfindungsgemäß wird durch eine Synchronisation der MAC-Rahmenstruktur von mehreren durch ein Brücken-Terminal verbundenen Sub-Netzwerken eine Minimierung oder ggf. auch eine Eliminierung der Wartezeit Tw erreicht. Unter Synchronisation der MAC-Rahmenstruktur wird dabei verstanden, dass die MAC-Rahmen mehrerer Sub-Netzwerke, die unterschiedliche Trägerfrequenzen aufweisen, nicht zu demselben Zeitpunkt beginnen, sondern vielmehr, dass die MAC-Rahmen exakt um die in Fig. 5 beschriebene Umschaltzeit Ts gegeneinander verschoben sind. Wenn die maximale Umschalt zeit genau einem halben MAC-Rahmen entspricht, werden durch diese konstante Verschiebung von einer halben MAC-Rahmendauer die Wartezeiten Tw der beiden MAC-Rahmenstrukturen nahezu komplett eliminiert.

Im folgenden wird eine Synchronisationsmethode erläutert, die als gleitende Synchronisation bezeichnet wird und bei der bei laufendem Betrieb eine konstante Verschiebung der MAC-Rahmenstruktur der von einem Brücken-Terminal verbundenen Sub-Netzwerke erreicht wird. Bei nicht synchronisierten MAC-Rahmenstrukturen können drei Varianten der gleitenden Synchronisation angewendet werden.

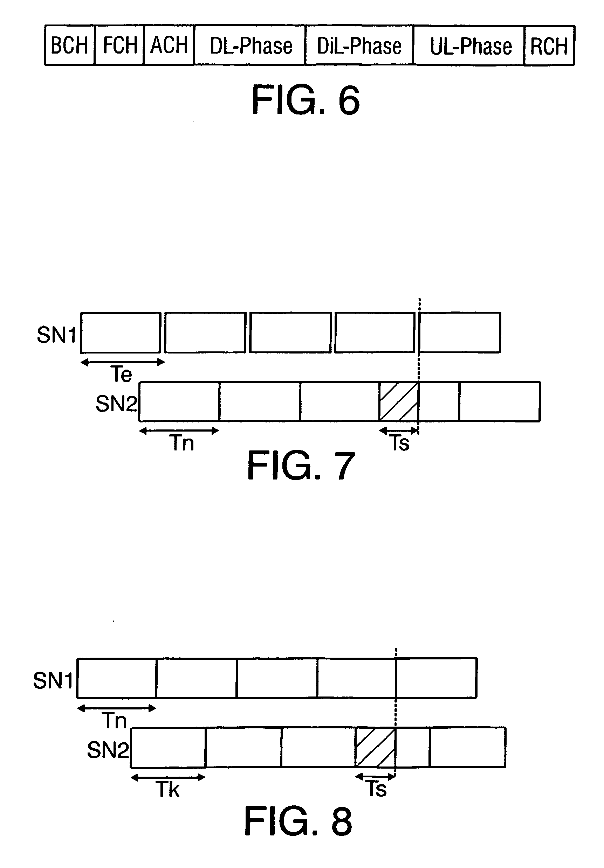

Bei der ersten Variante wird jeweils zwischen zwei MAC-Rahmen der MAC-Rahmenstruktur eines Sub-Netzwerks SN1 eine ungenutzte Phase eingefügt oder der MAC-Rahmen verlängert, solange bis die insgesamt optimale Verschiebung erreicht ist. Dies ist gleichbedeutend mit einer verzögerten Sendung einer Rahmenpräambel durch den Controller des Sub-Netzwerks SN1. Die Rahmenpräambel zeigt den Beginn eines MAC-Rahmens an und ist Teil des Verteil- oder Broadcast-Kanals BCH, der u.a. Steuerinformationen enthält und der am Anfang eines MAC-Rahmens auftritt. Dieser Broadcast-Kanal BCH ist ebenso wie die weiteren Kanäle und Phasen des MAC-Rahmens in Fig. 6 gezeigt. Auf den Broadcast-Kanal folgt ein Rahmen- oder Frame-Kanal, der Informationen über die Zuweisung der Zeitschlitze während darauffolgender Phasen enthält. Diese Phasen sind eine Downlink-Phase (DL-Phase), eine Direktverbindungsphase (DiL-Phase) und eine Uplink-Phase (UL-Phase). Ein Kanal RCH zum wahlfreien Zugriff ist am Ende des MAC-Rahmens angeordnet. Über diesen Kanal können beispielsweise Terminals mit einem Controller nach dem Einschalten in Kontakt treten. Antworten auf Anfragen eines Terminals über den Kanal RCH werden von dem Controller über einem Rückkopplungs-Kanal ACH (Association feedback channel) beantwortet. Der Rückkopplungs-Kanal ACH folgt auf den Rahmen-Kanal FCH. Daran schließen sich die Phasen DL-Phase, DiL-Phase und UL-Phase an.

Die erste Variante kann mit der Fig. 7 anhand von zwei Sub-Netzwerken SN1 und SN2 weiter erläutert werden. Jeder MAC-Rahmen des Sub-Netzwerks SN1 wird verzögert gesendet, was gleichbedeutend mit einem verlängerten MAC-Rahmen ist. Ein solcher MAC-Rahmen weist dann eine Dauer von Te auf, wobei Te > Tn. Tn ist die normale Dauer eines MAC-Rahmens und damit die Dauer des MAC-Rahmens des Sub-Netzwerks SN2. Wie Fig. 7 weiter zeigt, ist nach einigen MAC-Rahmen der Beginn eines MAC-Rahmens des Sub-Netzwerks SN1 mit dem Ende der Umschaltzeit Ts die nach dem Ende eines MAC-Rahmens des Sub-Netzwerks SN2 für die Synchronisierung des Brücken-Terminals mit dem Sub-Netzwerk SN1 benötigt wird zeitlich übereinstimmend. Nach der Synchronisation weisen die Abstände der aufeinanderfolgenden MAC-Rahmen des Sub-Netzwerks SN1 wieder die Dauer Tn auf.

Bei der zweiten Variante wird ein MAC-Rahmen um eine bestimmte Zeit verkürzt, solange bis die gewünschte Verschiebung erreicht ist. Eine Verkürzung des Rahmens könnte dadurch erreicht werden, dass der am Ende eines jeden MAC-Rahmens auftretende Kanal RCH früher endet. Es kann aber auch jeder andere Kanal oder jede andere Phase verkürzt werden. Diese zweite Variante kann mit der Fig. 8 anhand von zwei Sub-Netzwerken SN1 und SN2 weiter erläutert werden. Jeder MAC-Rahmen des Sub-Netzwerks SN2 wird verkürzt gesendet, was gleichbedeutend mit einem verkürzten MAC-Rahmen ist. Ein solcher MAC-Rahmen weist dann eine Dauer von Tk auf, wobei Tk < Tn < Te. Tn ist die normale Dauer eines MAC-Rahmens und damit die Dauer des MAC-Rahmens des Sub-Netzwerks SN1. Wie Fig. 7 weiter zeigt, ist nach einigen MAC-Rahmen der Beginn eines MAC-Rahmens des Sub-Netzwerks SN1 mit dem Ende der Umschaltzeit Ts die nach dem Ende eines MAC-Rahmens des Sub-Netzwerks SN2 für die Synchronisierung des Brücken-Terminals mit dem Sub-Netzwerk SN1 benötigt wird zeitlich übereinstimmend. Nach der Synchronisation weisen die MAC-Rahmen des Sub-Netzwerks SN2 wieder die Dauer Tn auf.

Bei der dritten Variante werden die erste und die zweite Variante miteinander kombiniert. Das bedeutet, dass beispielsweise bei zwei Sub-Netzwerken beim ersten Sub-Netzwerk während der Synchronisation aufeinanderfolgender MAC-Rahmen unbenutzte Phasen einfügt oder die MAC-Rahmen verlängert werden und das zweite Sub-Netzwerk verkürzte MAC-Rahmen aufweist.

Bei der ersten und bei der zweiten Variante erfolgt eine Einschränkung des Verkehrs ausschließlich in einem der beiden Sub-Netzwerke. Bei der dritten Variante besteht diese Einschränkung zwar auch, jedoch wird sie auf alle involvierte Sub-Netzwerke aufgeteilt und nicht einseitig einem Sub-Netzwerk zugemutet.

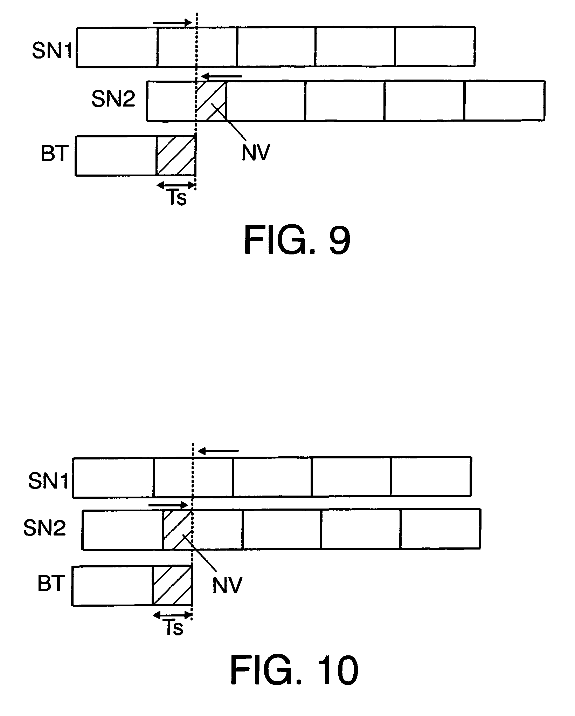

Im folgenden sei vorausgesetzt, das die Rahmenlänge 2ms und die maximale Umschaltzeit Ts = 1ms beträgt. Für diese Bedingungen wird anhand der Fig. 9 und 10 gezeigt, dass eine notwendige Verschiebung einer MAC-Rahmenstruktur immer kleiner als 1 ms ist. Im ersten Fall (Fig. 9) soll ein Wechsel der Synchronisation des Brücken-Terminals BT vom Sub-Netzwerk SN1 zum Sub-Netzwerk SN2 stattfinden. Optimal wäre es, wenn nach der Umschaltzeit Ts direkt ein MAC-Rahmen des Sub-Netzwerks SN2 beginnt. Die Verschiebung der MAC-Rahmenstrukturen zueinander kann in zwei unterschiedliche Richtungen erfolgen. Optimal ist die Verschiebung so, dass die Fläche NV (NV = notwendige Verschiebung) vermindert wird. Bei geeigneter Wahl der Verschiebungsrichtung ist diese Verschiebung im betrachteten Beispiel immer geringer als 1 ms. Die Umkehrung der Verschiebungsrichtung ist in Fig. 10 gezeigt.

Das Brücken-Terminal kann anhand der detektierten Rahmenanfangszeiten der eingebundenen Sub-Netzwerke selbst die Entscheidung treffen, in welche Richtung die Rahmen jeweils zu verschieben sind. Die Richtung sowie die notwendige Größe der Verschiebung wird den betroffenen Controllern mitgeteilt. Die Controller entscheiden dann selbst, innerhalb von wie viel Rahmen sie die Gesamtverschiebung herbeiführen. Es ist aber auch möglich, dass sich die betroffenen Controller über das Brücken-Terminal verständigen, in welche Richtung die Rahmen jeweils zu verschieben sind.

Bei einer Verschiebung von 1 ms (Extremfall) und bei einer Dauer der gleitenden Synchronisation von beispielsweise 250 MAC-Rahmen (5 s), ergibt sich beispielsweise eine Verzögerung oder Verkürzung eines MAC-Rahmens von jeweils 4µs.

## Patentansprüche

1. Verfahren zur Verschiebung einer Rahmen-Struktur in Sub-Netzwerken (1-3) eines drahtlosen Netzwerks, wobei ein Sub-Netzwerk (1-3) mehrere Terminals (4-14) umfasst und die Sub-Netzwerke (1-3) jeweils über Brücken-Terminals (4, 5) verbunden werden und ein Sub-Netzwerk (1-3) jeweils von einem als Controller fungierenden Terminal gesteuert wird und Daten zwischen den Terminals und den Sub-Netzwerken in Rahmen übertragen werden, wobei die Rahmen in benachbarten Sub-Netzwerken (1-3) zur Synchronisation verschoben, verkürzt und/oder verlängert werden, **dadurch gekennzeichnet, dass**
ein Brücken-Terminal (4, 5) innerhalb einer ersten Periode zur Kommunikation mit einem ersten Sub-Netzwerk synchronisiert ist und innerhalb einer zweiten Periode zur Kommunikation mit einem zweiten Sub-Netawerk synchronisiert ist, wobei die Rahmen von benachbarten Sub-Netawerken um eine aus einer Umschaltzeit T_{S} und einer Wartezeit T_{w} zusammengesetzten Zeit (T_{S}+T_{w}) gegeneinander verschoben sind, wobei die Umschaltzeit T_{S} diejenige Zeit ist, die erforderlich ist, damit sich das Brücken-Terminal mit dem anderen Sub-Netzwerk synchronisieren kann und die Wartezeit Tw, die Zeit ist, die erforderlich ist, um auf den Anfang eines Rahmens im anderenSub-Netzwerk zu warten, wobei die Verkürzung und/oder Verlängerung der Rahmen der benachbarten Sub-Netzwerke so dass ausgeführt wird, dass für das auf das erste Sub-Netzwerk synchronisierte Brücken-Terminal beim Umschalten zum zweiten Sub-Netzwerk nur noch die Umschaltzeit T_{S} erforderlich ist und nach Ablauf der Umschaltzeit T_{S} ein Rahmen im zweiten Sub-Netzwerk beginnt.

2. Verfahren nach Anspruch 1, **dadurch gekennzeichnet, dass** die Rahmen in wenigstens einem Sub-Netzwerk nur für die Dauer der Synchronisation verlängert und /oder verkürzt werden und nach einer Synchronisation wieder die ursprüngliche Rahmen-Länge verwendet wird.

3. Verfahren nach Anspruch 1, **dadurch gekennzeichnet, dass** das drahtlose Netzwerk als Ad-hoc Netzwerk ausgebildet ist, bei dem ein Einfügen oder Entfernen eines Terminals aus einem Sub-Netzwerk möglich ist, und die Terminals innerhalb des Sub-Netzwerkes (1-3) drahtlos kommunizieren und der Controller eines Sub-Netzwerkes einem Terminal Übertragungskapazität zuweist, wobei benachbarte Sub-Netzwerke auf unterschiedlichen Trägerfrequenzen kommunizieren.

4. Verfahren nach Anspruch 1, **dadurch gekennzeichnet, dass** das Netzwerk gemäß dem Standard HIPERLAN/2 operiert.

5. Verfahren nach Anspruch 1, **dadurch gekennzeichnet, dass** der Controller die Rahmen bis zu einer vorgegebenen Rahmendifferenz zur Rahmenstruktur des anderen Sub-Netzwerks verlängert und/oder eine ungenutzte Phase zwischen aufeinander folgenden Rahmen einfügt und/oder die Rahmen bis zu einer vorgegebenen Rahmendifferenz zur Rahmenstruktur des anderen Sub-Netzwerks verkürzt.

6. Verfahren nach Anspruch 1, **dadurch gekennzeichnet, dass** der Controller des ersten Sub-Netzwerks (1-3) die Rahmen verkürzt und wenigstens ein Controller eines anderen Sub-Netzwerks (1-3) die Rahmen verlängert oder eine ungenutzte Phase zwischen aufeinander folgenden Rahmen bis zu einer vorgegebenen Rahmendifferenz der Rahmenstrukturen der beiden Sub-Netzwerke einfügt.

7. Verfahren nach Anspruch 1, **dadurch gekennzeichnet, dass** der Controller eines Sub-Netzwerks (1-3) mit wenigstens einem anderen Controller eines anderen Sub-Netzwerks (1-3) über die Art der Verschiebung kommuniziert.

8. Verfahren nach Anspruch 1, **dadurch gekennzeichnet, dass** das Brücken-Terminal (4, 5) die Controller der angeschlossenen Sub-Netzwerke (1-3) anweist, welcher Controller eine Verschiebung in welche Richtung durchführen soll.

9. Controller, der mit einem Sub-Netzwerk (1-3) gekoppelt ist, das über Brücken-Terminals (4, 5) mit anderen Sub-Netzwerken (1-3) eines drahtlosen Netzwerks verbindbar ist, wobei der Controller zur Steuerung eines Sub-Netzwerkes und zur Verschiebung der Rahmenstruktur seines Sub-Netzwerks zu wenigstens einer Rahmenstruktur eines anderen Sub-Netzwerks vorgesehen ist, wobei die Datenübertragung zwischen dem Controller und den Terminals des Sub-Netzwerks in Rahmen erfolgt, **dadurch gekennzeichnet, dass** die Rahmen von benachbarten Sub-Netzwerken um eine aus einer Umschaltzeit T_{S} und einer Wartezeit T_{w} zusammengesetzten Zeit (T_{S}+T_{w}) gegeneinander verschoben sind, wobei die Umschaltzeit T_{S} diejenige Zeit ist, die erforderlich ist, damit sich das Brücken-Terminal mit dem anderen Sub-Netzwerk synchronisieren kann und die Wartezeit Tw, die Zeit ist, die erforderlich ist, um auf den Anfang eines Rahmens im anderen Sub-Netzwerk zu warten, und der Controller die Verkürzung und/oder Verlängerung der Rahmen seines Sub-Netzwerkes so ausführt, dass für das auf das erste Sub-Netzwerk synchronisierte Brücken-Terminal beim Umschalten zum zweiten Sub-Netzwerk nur noch die Umschaltzeit T_{S} erforderlich ist und nach Ablauf der Umschaltzeit T_{S} ein Rahmen im zweiten Sub-Netzwerk beginnt.

10. Drahtloses Netzwerk mit mehreren Sub-Netzwerken (1-3), wobei ein Sub-Netzwerk (1-3) mehrere Terminals (4-14) umfasst, und die Sub-Netzwerke (1-3) jeweils über Brücken-Terminals (4, 5) verbindbar sind, wobei ein Sub-Netzwerk (1-3) jeweils ein als Controller nach Anspruch 9 fungierendes Terminal zur Steuerung des Sub-Netzwerkes enthält und die Datenübertragung zwischen den Terminals und den Sub-Netzwerken in Rahmen erfolgt.

## Claims

1. A method of displacing a frame structure in subnetworks (1-3) of a wireless network, wherein a subnetwork (1-3) comprises a plurality of terminals (4-14) and the respective subnetworks (1-3) are connected via bridge terminals (4, 5), and each subnetwork (1-3) is controlled by a terminal functioning as controller and data are transmitted in frames between the terminals and the subnetworks, the frames in neighboring subnetworks (1-3) being displaced, shortened and/or lengthened for the purpose of synchronization, **characterized in that**, within a first period, a bridge terminal (4, 5) is synchronized with a first subnetwork and, within a second period, with a second subnetwork for the purpose of communication, wherein the frames of neighboring subnetworks are mutually offset by a period (Ts+Tw) composed of a switch-over time Ts and a waiting time Tw, the switch-over time Ts being the time required to enable the bridge terminal to synchronize with the other subnetwork and the waiting time Tw being the time required to wait for the beginning of a frame in the other subnetwork, the shortening and/or lengthening of the frames of the neighboring subnetworks being performed in such a way that, when switching over to the second subnetwork, only the switch-over time Ts is required for the bridge terminal synchronized with the first subnetwork, and that a frame begins in the second subnetwork after termination of the switch-over time Ts.

2. A method as claimed in claim 1, **characterized in that** the frames in at least one subnetwork are lengthened and/or shortened only for the duration of synchronization, and that the original frame position is used again after synchronization.

3. A method as claimed in claim 1, **characterized in that** the wireless network is constituted as an ad hoc network in which insertion or removal of a terminal from a subnetwork is possible, and the terminals within the subnetwork (1-3) communicate in a wireless manner, and the controller of a subnetwork assigns transmission capacity to a terminal, with neighboring subnetworks communicating at different carrier frequencies.

4. A method as claimed in claim 1, **characterized in that** the network operates in accordance with the HIPERLAN/2 standard.

5. A method as claimed in claim 1, **characterized in that** the controller lengthens the frames up to a predetermined frame difference with the frame structure of the other subnetwork and/or inserts an unused phase between consecutives frames and/or shortens the frames up to a predetermined frame difference with the frame structure of the other subnetwork.

6. A method as claimed in claim 1, **characterized in that** the controller of the first subnetwork (1-3) shortens the frames, and at least one controller of another subnetwork (1-3) lengthens the frames or inserts an unused phase between consecutive frames up to a predetermined frame difference of the frame structures of the two subnetworks.

7. A method as claimed in claim 1, **characterized in that** the controller of a subnetwork (1-3) communicates with at least one other controller of another subnetwork (1-3) about the type of displacement.

8. A method as claimed in claim 1, **characterized in that** the bridge terminal (4, 5) instructs the controllers of the connected subnetworks (1-3) which controller is to perform a displacement in which direction.

9. A controller coupled to a subnetwork (1-3) which is connectable to other subnetworks (1-3) of a wireless network via bridge terminals (4, 5), the controller being provided to control a subnetwork and to displace the frame structure of its subnetwork to at least a frame structure of another subnetwork, the data transmission between the controller and the terminal of the subnetwork being effected in frames, **characterized in that** the frames of neighboring subnetworks are mutually offset by a period (Ts+Tw) composed of a switch-over time Ts and a waiting time Tw, the switch-over time Ts being the time required to enable the bridge terminal to synchronize with the other subnetwork and the waiting time Tw being the time required to wait for the beginning of a frame in the other subnetwork, the controller performing the shortening and/or lengthening of the frames of its subnetworks in such a way that, when switching over to the second subnetwork, only the switch-over time Ts is required for the bridge terminal synchronized with the first subnetwork, and that a frame begins in the second subnetwork after termination of the switch-over time Ts.

10. A wireless network comprising a plurality of subnetworks (1-3), in which a subnetwork (1-3) comprises a plurality of terminals (4-14) and the respective subnetworks (1-3) are connectable via bridge terminals (4, 5), wherein each subnetwork (1-3) includes a terminal functioning as controller as claimed in claim 9 for controlling the subnetwork, and the data transmission between the terminals and the subnetworks is effected in frames.

## Revendications

1. Procédé de décalage d'une structure cadre en sous-réseaux (1-3) d'un réseau sans fil, dans lequel un sous-réseau (1-3) comprend plusieurs terminaux (4-14) et les sous-réseaux (1-3) peuvent être respectivement reliés par l'intermédiaire de terminaux de pont (4, 5) et un sous-réseau (1-3) est commandé respectivement par un terminal faisant office de contrôleur et les données entre les terminaux et les sous-réseaux sont transmises dans des cadres, les cadres étant décalés dans des sous-réseaux (1-3) voisins pour la synchronisation, raccourcis/ou prolongés, **caractérisé en ce**
**qu'**un terminal de pont (4, 5) est synchronisé dans une première période pour la communication avec un premier sous-réseau et, dans une deuxième période, pour la communication avec un deuxième sous-réseau, les cadres de sous-réseaux voisins étant décalés l'un par rapport à l'autre d'un temps de commutation Tₛ et d'un temps d'attente T_{w} (Tₛ + T_{w}), le temps de commutation Tₛ étant le temps nécessaire afin que le terminal de pont puisse se synchroniser avec l'autre sous-réseau et le temps d'attente T_{w} le temps nécessaire pour attendre au début d'un cadre dans l'autre sous-réseau, le raccourcissement et/ou l'allongement des cadres des sous-réseaux voisins étant effectués de telle sorte que, pour le terminal de pont synchronisé sur le premier sous-réseau en cas de commutation au deuxième sous-réseau, il ne faut plus que le temps de commutation Tₛ et, à la fin du temps de commutation Tₛ, un cadre commence dans le deuxième sous-réseau.

2. Procédé selon la revendication 1, **caractérisé en ce que** les cadres ne sont allongés et/ou raccourcis dans au moins un sous-réseau que pendant la durée de la synchronisation et, après une synchronisation, la longueur de cadre originale est à nouveau utilisée.

3. Procédé selon la revendication 1, **caractérisé en ce que** le réseau sans fil est conçu comme un réseau ad hoc dans lequel l'intégration ou l'élimination d'un terminal à partir d'un sous-réseau est possible et les terminaux à l'intérieur du sous-réseau (1-3) communiquent sans fil et le contrôleur d'un sous-réseau attribue à un terminal une capacité de transmission, les sous-réseaux voisins communiquant sur différentes fréquences porteuses.

4. Procédé selon la revendication 1, **caractérisé en ce que** le réseau opère selon la norme HIPERLAN/2.

5. Procédé selon la revendication 1, **caractérisé en ce que** le contrôleur allonge les cadres jusqu'à une différence de cadre préalablement déterminée par rapport à la structure cadre de l'autre sous-réseau et/ou insère une phase inutilisée entre des cadres successifs et/ou raccourcit les cadres jusqu'à une différence de cadre préalablement déterminée par rapport à la structure cadre de l'autre sous-réseau.

6. Procédé selon la revendication 1, **caractérisé en ce que** le contrôleur du premier sous-réseau (1-3) raccourcit les cadres et au moins un contrôleur d'un autre sous-réseau (1-3) allonge les cadres ou insère une phase inutilisée entre des cadres successifs jusqu'à une différence de cadre préalablement déterminée des structures cadres des deux sous-réseaux.

7. Procédé selon la revendication 1 **caractérisé en ce que** le contrôleur d'un sous-réseau (1-3) communique avec moins un autre contrôleur d'un autre sous-réseau (1-3) à propos du type de décalage.

8. Procédé selon la revendication 1 **caractérisé en ce que** le terminal de pont (4, 5) ordonne aux contrôleurs des sous-réseaux raccordés (1-3) quel contrôleur doit effectuer un décalage dans quelle direction.

9. Contrôleur qui est couplé à un sous-réseau (1-3) qui peut être relié par l'intermédiaire de terminaux de pont (4, 5) avec d'autres sous-réseaux (1-3) d'un réseau sans fil, le contrôleur étant prévu pour la commande d'un sous-réseau et pour le décalage de la structure cadre de son sous-réseau vers au moins une structure cadre d'un autre sous-réseau, la transmission de données entre le contrôleur et les terminaux du sous-réseau intervenant dans des cadres, **caractérisé en ce que** les cadres de sous-réseaux voisins sont décalés l'un par rapport à l'autre d'un temps (Tₛ+T_{w}) composé d'un temps de commutation Tₛ et d'un temps d'attente T_{w}), le temps de commutation Tₛ étant le temps nécessaire afin que le terminal de pont puisse se synchroniser avec l'autre sous-réseau et le temps d'attente T_{w} étant le temps nécessaire pour attendre le début d'un cadre dans l'autre sous-réseau et le contrôleur exécute le raccourcissement/ou la prolongation des cadres de son sous-réseau de telle sorte que, pour le terminal de pont synchronisé sur le premier sous-réseau, seul le temps de commutation Tₛ soit nécessaire en cas de commutation vers le deuxième sous-réseau et, après l'expiration du temps de commutation Tₛ, un cadre commence dans le deuxième sous-réseau.

10. Réseau sans fil avec plusieurs sous-réseaux (1-3), dans lequel un sous-réseau (1-3) comprend plusieurs terminaux (4-14) et les sous-réseaux (1-3) peuvent respectivement être reliés par l'intermédiaire de terminaux de pont (4,5), un sous-réseau (1,3) contenant respectivement un terminal faisant office de contrôleur selon la revendication 9 pour la commande du sous-réseau et la transmission de données étant effectuée entre les terminaux et les sous-réseaux dans les cadres.
